(19) Europäisches Patentamt

European Patent Office

Office européen des brevets

(11) **EP 2 047 414 B1**

(12) **FASCICULE DE BREVET EUROPEEN**

(45) Date de publication et mention
de la délivrance du brevet:
**02.10.2013 Bulletin 2013/40**

(21) Numéro de dépôt: **06794305.0**

(22) Date de dépôt: **03.08.2006**

(51) Int Cl.:
***G06K 19/077*** *(2006.01)*

(86) Numéro de dépôt international:
**PCT/FR2006/001920**

(87) Numéro de publication internationale:
**WO 2008/015317 (07.02.2008 Gazette 2008/06)**

(54) **DOCUMENT SÉCURISÉ, NOTAMMENT PASSEPORT ÉLECTRONIQUE À SÉCURITÉ RENFORCÉE**

**SICHERES DOKUMENT, INSBESONDERE ELEKTRONISCHER PASS MIT VERBESSERTER SICHERHEIT**

**SECURE DOCUMENT, IN PARTICULAR ELECTRONIC PASSPORT WITH ENHANCED SECURITY**

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**15.04.2009 Bulletin 2009/16**

(73) Titulaire: **Smart Packaging Solutions (SPS)**
**13106 Rousset (FR)**

(72) Inventeurs:
• **BRUNET, Olivier**
**F-13012 Marseille (FR)**
• **ARTIGUE, Olivier**
**F-83160 La Valette du Var (FR)**
• **BOCCIA, Henri**
**F-13720 Belcodene (FR)**
• **PATRICE, Philippe**
**F-13011 Marseille (FR)**
• **PEYTAVIN, Ivan**
**F-13009 Marseille (FR)**

(74) Mandataire: **Scheer, Luc**
**Global Inventions**
**38, Allée Valériane- Domaine de la Tour**
**83700 Saint-Raphael (FR)**

(56) Documents cités:
**WO-A-2004/008386      FR-A- 2 840 431
FR-A- 2 863 388           FR-A- 2 863 748
FR-A- 2 888 653           US-A1- 2003 164 611
US-B1- 6 371 378**

**Description**

L'invention concerne un document sécurisé, tel que notamment un document d'identité ou un passeport électronique, comprenant un dispositif d'identification radiofréquence. L'invention concerne également un système d'identification utilisant de tels documents sécurisés.

Pour davantage de clarté et de simplification de la suite de l'exposé et de la description de l'invention, on se référera à l'ensemble des documents sécurisés, qu'ils aient ou non une fonction d'identification d'une personne ou d'un objet, par la terminologie « document sécurisé », sans que ce terme ne soit à comprendre de manière restrictive par rapport au facteur de forme du document, qui peut d'ailleurs revêtir la forme classique d'un document, notamment en papier, ou être même constitué d'un objet portable sécurisé d'un autre type, comme par exemple une carte à mémoire ou une carte à puce.

On connaît déjà dans l'état de la technique, des documents plus ou moins sécurisés pouvant servir à l'identification des personnes ou des objets. Ainsi, on connaît des documents tels que des cartes d'identité, des passeports, des cartes grises pour l'identification de véhicules, et des permis de conduire, documents qui utilisent certains artifices sécuritaires comme des impressions de type « guilloches », des pavés de signature prévus pour recevoir la signature du titulaire, ou même des hologrammes fixés sur le support du document.

Parmi ces documents sécurisés connus, il y a donc ceux qui utilisent simplement un artifice sécuritaire visuel tel que les guilloches imprimées sur le document et mentionnées précédemment. C'est encore le cas aujourd'hui pour la plupart des passeports en circulation dans la plupart des pays. Ces impressions de guilloches sont de simples moyens visuels et passifs d'identification. Mais, étant difficiles à reproduire, elles contribuent certes à élever le niveau de sécurité par rapport à des documents sans ces artifices sécuritaires, même si le niveau de sécurité atteint n'est plus conforme avec les exigences actuelles.

Ainsi, il arrive fréquemment que du papier servant à fabriquer des documents d'identité soit volé par des filières criminelles, et utilisé pour fabriquer des faux documents d'identité. Il arrive également que des documents d'identité vierges, tels que par exemple des passeports non encore personnalisés avec les coordonnées de leur titulaire, soient volés et ensuite mis illégalement en circulation à la demande de personnes ayant besoin de faux papiers.

Suite à ces difficultés, un autre type de documents d'identité a commencé à apparaître. Il s'agit de documents d'identité incorporant, éventuellement en plus des artifices sécuritaires imprimés mentionnés précédemment, des moyens d'identification actifs, sous la forme d'une puce électronique ou microcircuit, qui est solidarisé avec le document d'identité, et dont la mémoire est chargée avec des informations d'identité du titulaire du document. Les informations stockées dans la puce peuvent être lues par un lecteur dédié et vérifiées par connexion à des bases de données capables de faire une série de recoupements. En outre, les données lues par le lecteur peuvent être affichées sur l'écran d'un système de lecture, à la demande d'une personne chargée du contrôle, et elles doivent alors correspondre à celles imprimées par ailleurs sur le document.

S'il est indéniable que les documents sécurisés pourvus de moyens de sécurité passifs tels que des guilloches, ou de moyens de sécurité actifs tels qu'un microcircuit stockant des données, présentent une résistance accrue à la falsification par rapport aux documents sans puce électronique, il restent cependant falsifiables par des réseaux déterminés et pourvus de moyens techniques suffisants.

En effet, certains faussaires sont capables de prélever le microcircuit sur un vrai document volé, et de le réinsérer dans un faux document d'identité.

Ainsi, un des inconvénients des passeports électroniques déjà connus est qu'il est en pratique possible, en procédant avec minutie et avec les outils appropriés, de prélever le microcircuit permettant l'identification radiofréquence du titulaire du document, et de le réinsérer dans un autre passeport ou document d'identité, qui constitue alors un faux. Il suffit pour cela d'imprimer le passeport vierge (comportant entre autres les guilloches authentiques), avec les informations d'identification de la personne, telles qu'elles sont mémorisées dans la puce.

Lors d'un contrôle du document par les autorités, le document d'identité passera le test visuel, puisqu'il aura toutes les apparences d'un document d'identité valide, et il passera le test réalisé à l'aide d'un lecteur, puisque celui-ci détectera la présence d'un microcircuit et éventuellement des informations chargées en mémoire. En outre, il y aura le plus souvent une bonne correspondance entre les informations d'identification stockées en mémoire, et les informations d'identification imprimées sur le support du document, de sorte que ce genre de falsification est particulièrement difficile à détecter par les autorités.

La demande internationale de brevet WO2004/008386 A1 concerne une carte d'identité ou carte à puce qui comprend un substrat, en papier par exemple. Une antenne est imprimé sur le substrat ainsi que deux premières armatures de deux condensateurs. La contre-électrode, c'est-à-dire l'autre armature des deux condensateurs, est formée par une bande conductrice qui constitue aussi une caractéristique de sécurité de la carte d'identité comme une guilloche ou un hologramme.

Un but de l'invention est par conséquent de proposer un document sécurisé, notamment un passeport électronique, qui soit encore plus sûr que les documents sécurisés connus dans l'état de la technique

Un autre but de l'invention est de proposer un document sécurisé pourvu d'un microcircuit électronique, et qui soit capable de résister au prélèvement abusif du microcircuit, ou alors qui soit tel que le prélèvement du microcircuit à partir du document d'origine rende le document totalement inutilisable.

Un autre but de l'invention est de proposer un document sécurisé à microcircuit à fonctionnement à contact et/ou sans contact, notamment par radiofréquence dans ce dernier cas, et qui ne puisse fonctionner, à l'égard du lecteur à contact ou à radiofréquence susceptible d'interagir avec lui, que lorsque le document sécurisé comporte bien le microcircuit électronique d'origine, ainsi que des moyens de sécurité passifs d'origine, de sorte que l'altération d'un des deux types de moyens sécuritaires rende l'ensemble du document inopérant, c'est-à-dire qu'il ne peut pas être détecté comme étant valide par les lecteurs prévus.

A cet effet, le principe de l'invention prévoit de lier intimement et fonctionnellement les moyens sécuritaires visuels ou passifs du document sécurisé, tels que les guilloches et autres, avec les caractéristiques sécuritaires actives incorporées dans un circuit microélectronique porté par le document. Les moyens de sécurité passifs sont conçus pour être aptes à interagir avec les moyens de sécurité actifs de façon à les rendre fonctionnels lorsque le document sécurisé est placé dans le champ électromagnétique d'un lecteur sans contact. De cette façon, la composante sécuritaire basée sur les moyens de sécurité graphiques du document, et la composante sécuritaire basée sur les informations stockées dans la puce microélectronique forment un tout indivisible apte à augmenter considérablement le niveau de sécurité des documents sécurisés, notamment des documents d'identité sécurisés.

Pour mettre en oeuvre ce nouveau principe, l'invention a pour objet un document securisé selon la revendication 1.

De préférence, la réponse électromagnétique des moyens de sécurité actifs est en outre filtrée, de façon à ce que le signal amplifié, notamment le courant induit dans les moyens de sécurité actifs, le soit dans une plage de fréquence caractéristique du support sécurisé.

De préférence, l'antenne des moyens de sécurité actifs est calculée et agencée pour ne pas permettre la reconnaissance du document sécurisé par un lecteur, en l'absence desdits moyens de sécurité passifs. C'est-à-dire qu'en l'absence des moyens de sécurité passifs associés (tels que des guilloches spécifiques), le signal obtenu aux bornes des moyens de sécurité actifs en réponse au signal d'interrogation du lecteur, ne peut jamais être suffisant, quelle que soit notamment la proximité du lecteur, pour lire les informations d'identité contenues dans la puce. Et par voie de conséquence, en-dehors de l'association spécifique sur le même support de la puce d'origine, et des moyens de sécurité passifs d'origine, le lecteur ne pourra jamais déclarer le document sécurisé valide.

Dans un premier mode de réalisation de l'invention, les moyens de sécurité passifs comportent un réseau de guilloches conductrices imprimées sur le support, notamment à l'aide d'encres conductrices, et choisies de manière à ce que le circuit (R,L,C) qu'elles forment amplifie le courant induit dans l'antenne des moyens de sécurité actifs lorsque le document est placé dans le champ d'un lecteur sans contact, pour amener le courant induit au-delà d'un seuil nécessaire à assurer le fonctionnement du microcircuit des moyens de sécurité actifs.

Dans une variante de réalisation de l'invention, les moyens de sécurité passifs comportent un pavé de signature réalisé sur le support, ce pavé de signature possédant lui aussi des caractéristiques électriques (R, L,C) et électromagnétiques spécifiques. Une autre variante de réalisation de l'invention prévoit, à la place des guilloches conductrices ou du pavé de signature, un hologramme réalisé sur le support. Une variante encore plus sophistiquée peut comprendre pour les moyens de sécurité passifs, toutes les combinaisons de guilloches, d'un pavé de signature et/ou d'un hologramme, sachant que l'ensemble aura là aussi des caractéristiques R,L,C et électromagnétiques spécifiques.

Dans le cas où le document de signature est réalisé sous la forme classique des passeports comportant un livret ayant une pluralité de pages avec éventuellement une page de couverture plus épaisse que les pages internes pour recevoir la puce, on peut prévoir que les moyens de sécurité actifs sont insérés dans une première page ou dans la page de couverture, et que les moyens de sécurité passifs sont disposés sur une autre page, mais l'arrangement inverse reste également possible.

Cet agencement empêche notamment une technique de fraude classique, qui consiste à placer à l'intérieur d'une couverture de passeport électronique volé (et doté d'une puce électronique), un ensemble de pages guillochées récupérées par ailleurs. Grâce à l'invention, un passeport avec des guilloches ne présentant pas les caractéristiques R,L,C spécifiques permettant le fonctionnement de la puce, ne pourra pas être lu par le lecteur et sera considéré comme étant un faux passeport.

Dans un mode de réalisation avantageux et compact du document sécurisé selon l'invention, celui-ci se présente sous la forme d'une carte à puce, les moyens de sécurité actifs ayant la forme d'un module microélectronique comprenant une puce reliée à une antenne et incorporé au corps de la carte à puce, et les moyens de sécurité passifs étant disposés dans une couche interne ou dans l'épaisseur de la carte à puce de manière à amplifier le champ électromagnétique traversant le module microélectronique lorsque la carte à puce est placée dans le champ d'un lecteur.

Le document sécurisé selon l'invention peut être tel que les moyens de sécurité actifs comportent un microcircuit sans contacts externes, les bornes du microcircuit étant uniquement reliées à une antenne, ce qui le rend apte à interagir uniquement avec des lecteurs sans contacts.

Alternativement, les moyens de sécurité actifs comportent un microcircuit pourvu de contacts tout en étant par ailleurs relié à une antenne, et rendent le document sécurisé apte à interagir soit en mode à contact avec des lecteurs à contact, soit en mode sans contact avec des lecteurs sans contact.

Par ailleurs, dans le cas où on fait appel à des moyens de sécurité passifs sous la forme de guilloches, il est théoriquement possible que l'ensemble du réseau de guilloches soit conducteur. Cependant, les encres conductrices servant à l'impression des guilloches sont relativement chères. De plus, la résistance électrique d'un réseau de guilloches entièrement conducteur serait très élevée, ce qui rendrait plus difficile le choix des autres paramètres (L,C) pour obtenir un fonctionnement satisfaisant. Une alternative avantageuse consiste à ne sélectionner, dans le réseau de guilloches, que certaines d'entre elles à réaliser en encre conductrice. Cette solution présente le double avantage d'être moins chère, mais aussi d'accroître encore la sécurité, puisqu'il sera encore plus difficile pour un fraudeur de déterminer les caractéristiques du réseau de guilloches conductrices à reproduire, puisqu'il ne suffira pas de reproduire l'ensemble des guilloches apparaissant visuellement sur le passeport électronique.

Une autre variante de l'invention consiste à remplacer les guilloches conductrices par une antenne intégrée dans le réseau de guilloches le plus discrètement possible, d'un point de vue visuel, le réseau de guilloches étant alors réalisé de façon classique en encre non conductrice.

L'invention a également pour objet un système de vérification d'identité selon la revendication 13.

D'autres caractéristiques et avantages de l'invention apparaîtront à la lecture de la description détaillée et des dessins annexés dans lesquels :

- la figure 1 illustre un document sécurisé à microcircuit et sans guilloches, selon l'état de la technique.
- la figure 2 illustre un document sécurisé à microcircuit identique à celui de la figure 1, en vue en plan faisant apparaître des guilloches, avec un arrachage partiel pour faire apparaître les moyens de sécurité actifs ;
- la figure 3 illustre un premier mode de réalisation d'un document sécurisé selon l'invention,
- la figure 4 illustre un schéma électrique d'un système composé d'un lecteur de documents sécurisés, et d'un document sécurisé selon l'invention ;
- la figure 5 représente sous forme graphique la puissance électromagnétique réfléchie par le système de la figure 4 ;

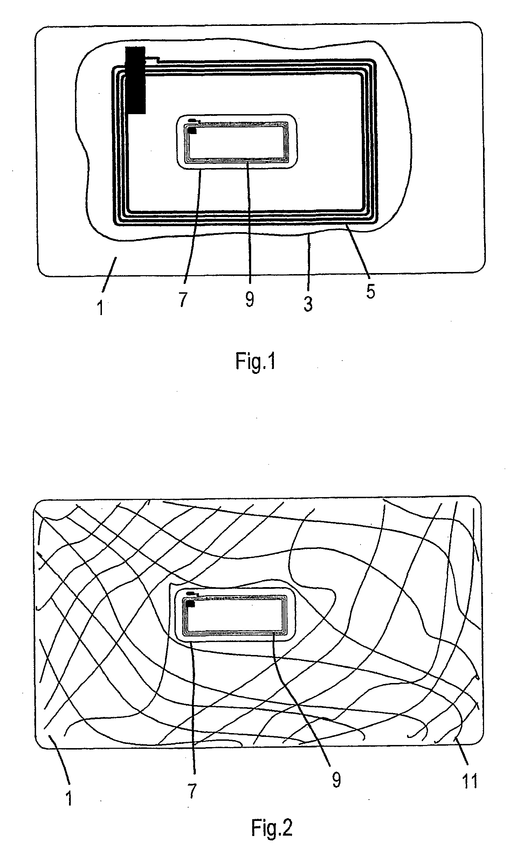

On se réfère à la figure 1. On a représenté dans cette figure un schéma de principe en plan d'un document sécurisé 1 connu dans l'état actuel de la technique, ce document étant réalisé au format d'une carte à puce. La représentation comporte un arrachage partiel 3 pour faire apparaître la couche du corps de carte comportant l'antenne 5. Le document sécurisé 1 comporte un module microélectronique 7 comportant une puce (non représentée) dont les bornes sont reliées aux bornes d'une petite antenne 9. Compte tenu de la faible taille de l'antenne 9, le flux magnétique qui peut être récupéré par l'antenne 9 lors du passage dans le champ magnétique d'un lecteur, est relativement faible, ce qui limite la portée de fonctionnement du document d'identité. Pour remédier à cela, il est connu d'ajouter sur le corps de carte une antenne 5 de plus grande taille, dont l'effet, connu en soi, sera d'amplifier considérablement, par mutuelle inductance, le flux capté par la petite antenne 9 lorsque la carte passe dans le champ du lecteur.

Cependant, on observe dans cette réalisation connue, qu'elle est assez facile à frauder, puisqu'elle ne comporte qu'une composante de sécurité active. Il suffit, pour obtenir un document d'identité fonctionnel, de reporter le micromodule 7 détaché d'un autre passeport, sur une fausse carte, c'est-à-dire sur un corps de carte personnalisé avec les informations relatives aux faux porteur.

Pour remédier à cela et augmenter quelque peu la sécurité du document, il est également connu, comme représenté en figure 2, de revêtir le corps de carte 1 d'une série de moyens de sécurité passifs visuels, tels que des guilloches 11. L'impression de guilloches est réalisée avec des encres non conductrices, et fait appel, en ce qui concerne leur forme et leur répartition, à des fonctions mathématiques aléatoires, comme connu en soi. Tous les fraudeurs potentiels ne maîtrisent pas ce type d'impression, ce qui réduit un peu le risque de fraude. Cependant, il n'y a toujours pas, dans cette seconde variante de l'état de la technique, une association intime des moyens de sécurité passifs que constituent les guilloches, avec les moyens de sécurité actifs que constitue le module microélectronique 7. Il s'agit en fait d'une simple juxtaposition de moyens, sans interaction entre eux.

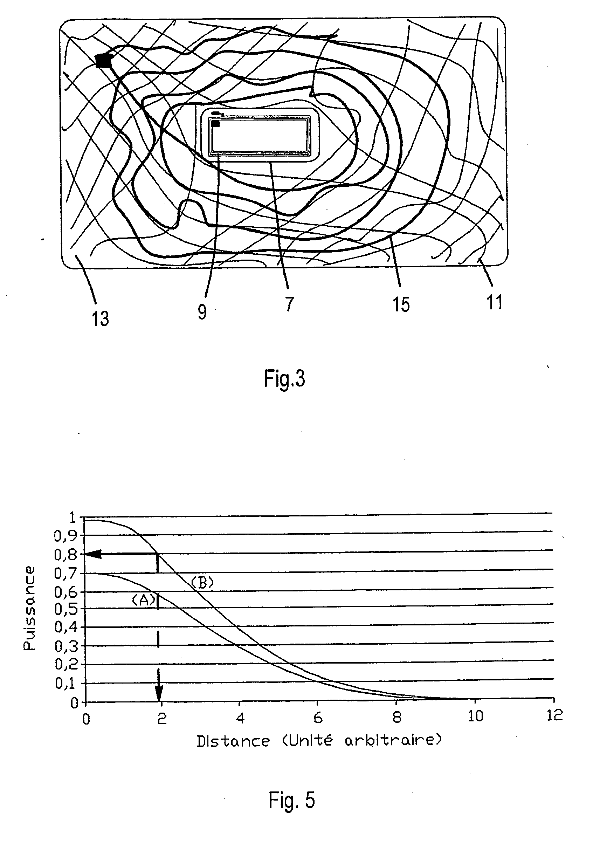

On se réfère maintenant à la figure 3, qui représente schématiquement le principe de l'invention, en association avec des guilloches 11 non conductrices, étant entendu que cet exemple n'est nullement limitatif, le principe de l'invention pouvant être mis en oeuvre avec d'autres types de moyens de sécurité passifs, tel que notamment les pavés de signature, les hologrammes ou autres, ou une combinaison de tels moyens de sécurité passifs. Le document sécurisé 13 représenté sous la forme d'un passeport électronique au format carte à puce (qu'il soit à la norme ISO 7816 ou non), comporte toujours un module électronique 7 pourvu d'une puce et d'une petite antenne 9, ainsi que des guilloches classiques 11 imprimées sur le corps de carte.

Selon la figure 3, une antenne 15 est prévue et intégrée visuellement dans le réseau des guilloches 11 pour s'y confondre. Elle n'est électriquement connectée à aucun autre composant, mais on utilise ses caractéristiques R,L,C comme cela sera expliqué plus en détail plus loin. Il est à noter que cette antenne 15 peut avantageusement aussi être constituée, pour remplir la même fonction, par certaines guilloches (notées 15 également) ayant spécifiques, ayant les mêmes caractéristiques électromagnétiques.

L'antenne ou les guilloches 15 sont imprimées en encre conductrice, avec des couleurs que ne permettent pas de les distinguer des autres guilloches 11, non conductrices, du réseau de guilloches. Elles ont des caractéristiques électriques de résistance R, inductance L et capacité C spécifiques, qui en font un circuit R,L,C différencié d'une carte à l'autre, ou d'un type de carte à un autre type de carte. On peut par exemple en pratique avoir le même réseau de guilloches pour un même client pour toutes les cartes émises entre des dates données. On pourrait aussi avoir un degré de différentiation plus ou moins poussé, en fonction de l'application et des besoins de sécurité exprimés par l'émetteur de cartes.

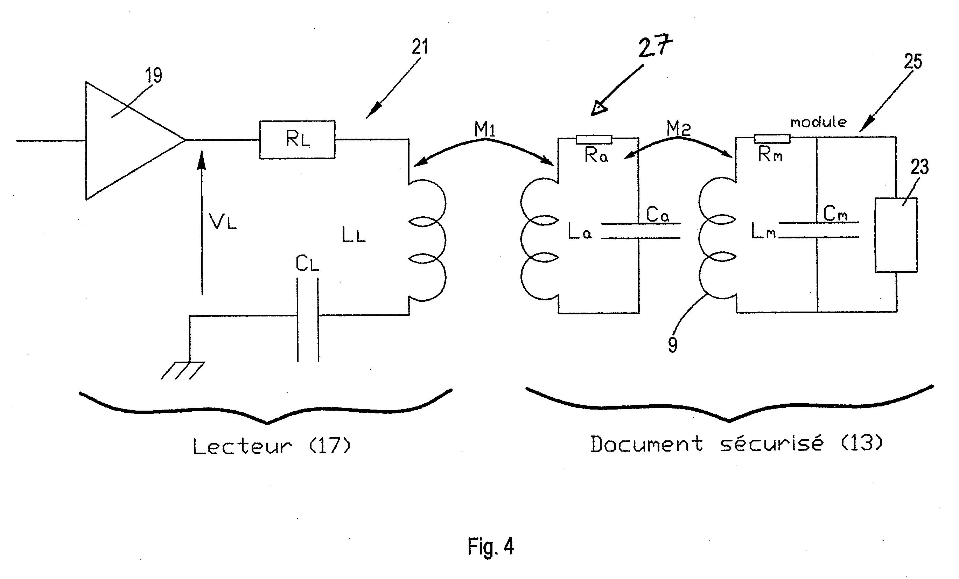

On se réfère aux figures 4 et 5 pour expliquer plus en détail le fonctionnement électrique et électromagnétique d'un système utilisant un lecteur de documents sécurisés, et des documents sécurisés conformes à l'invention.

Dans la figure 4, on a représenté sur la partie gauche le schéma électrique de principe d'un lecteur 17 à fonctionnement sans contact. Il comporte de façon connue, un amplificateur 19 qui délivre à un circuit (R,L,C) 21, un signal destiné à un document électronique sécurisé. Le signal peut en principe être un signal commandant la lecture d'informations stockées dans la mémoire du document sécurisé, ou encore un signal d'écriture, étant toutefois entendu que dans une application de sécurité classique, le lecteur 17 enverra un signal de lecture au document sécurisé 13 pour vérifier son authenticité et la bonne correspondance avec le porteur du document. Dans la partie droite, on a représenté le schéma électrique de principe d'un document sécurisé 13 selon l'invention. Il comporte des moyens de sécurité actifs, sous la forme d'une puce microélectronique 23 comportant au moins une mémoire dans laquelle sont stockées les informations à lire par le lecteur, cette puce ayant au moins un de ses circuits, typiquement son circuit d'alimentation, connecté à un circuit $R_m, L_m, C_m$ faisant office d'antenne. Les caractéristiques $R_m, L_m, C_m$ sont choisies de telle manière que quelle que soit la distance du document sécurisé 13 par rapport au lecteur 17, c'est-à-dire même si cette distance est nulle ou quasi-nulle, le courant induit par le lecteur dans le circuit d'alimentation de la puce 23 est insuffisant pour réveiller la puce et pour la faire fonctionner en lecture ou en écriture.

A ces moyens de sécurité actifs (23,25) sont associés des moyens de sécurité passifs 27, sous la forme d'un amplificateur de champ magnétique, dont les caractéristiques électriques, $R_a, L_a, C_a$, sont choisies pour amplifier de façon considérable, par mutuelle inductance notée M2, le signal électromagnétique de lecture ou d'écriture en provenance du lecteur 17 par le couplage M1. De la sorte, il circule alors dans le circuit d'alimentation 25 de la puce 23, un courant supérieur au courant minimal pour faire fonctionner la puce.

Il est à noter que du fait des caractéristiques de fonctionnement des circuits $R_a, L_a, C_a$, l'amplification par l'amplificateur de champ 27 s'accompagne d'un filtrage en fréquence, de sorte qu'il est possible de caler sur une plage de fréquence caractéristique, le pic d'amplitude de champ ou de courant induit, dû au couplage avec les moyens de sécurité passifs. Ainsi, seul le couplage électromagnétique de moyens de sécurité actifs (23,25) et passifs (27) correctement appariés sera susceptible d'amener le courant induit dans les moyens de sécurité passifs au-delà de leur seuil de fonctionnement, et donc pourra faire fonctionner un document de sécurité donné.

La figure 5 représente une courbe représentative de la puissance électromagnétique réfléchie par le document sécurisé 13, par exemple la courbe de l'intensité du courant induit dans le circuit d'alimentation de la puce 23, en fonction de la distance avec le lecteur 17, mesurée en unités arbitraires. La représentation est faite en l'absence d'amplification de champ magnétique (courbe A), et avec amplification de champ magnétique (courbe B). On voit sur la courbe A que quelle que soit la proximité du document sécurisé par rapport au lecteur, l'intensité du courant induit restera toujours inférieure au seuil S permettant de faire fonctionner la puce 23. Par contre, on voit sur la courbe B que grâce à l'amplification, il existe des zones (dans l'exemple représente, celles pour lesquelles la distance entre le lecteur et le document sécurisé est inférieure à deux unités de distance) dans lesquelles le courant induit est supérieur au seuil minimal S, ce qui permet de réveiller la puce et de la faire fonctionner.

Chaque ensemble de guilloches spécifiques 15 est calculé de manière à amplifier le champ électromagnétique du lecteur 17 d'un système d'identification, dans une plage de fréquence déterminée, ce qui a pour effet d'amplifier et de filtrer le flux dont profite l'antenne 9 du micromodule 7. De préférence, le circuit d'antenne 9 du module 7 est calculé de telle manière que le flux issu du seul courant induit dans l'antenne 9 en l'absence des guilloches conductrices 15, ne permet pas de « réveiller » la puce du micromodule 7 et de la lire. Par contre, les guilloches 15 sont quant à elles calculées, par l'homme de métier, du point de vue de leur taille, et de leur disposition, pour constituer un circuit électronique qui est tel que le champ qu'elles récupèrent permette, par mutuelle inductance M2, d'amplifier considérablement le courant induit dans l'antenne 9, dans une plage de fréquence déterminée. Cette amplification permet d'amener le champ et donc le courant induit, au-delà d'un seuil qui permet de « réveiller » la puce du micromodule 7 dans sa plage de fréquence de fonctionnement associée, et donc de communiquer avec la puce en lecture et/ou en écriture.

On va maintenant décrire plus en détail le rôle et le fonctionnement de concentrateur ou d'amplificateur de champ magnétique rempli par le circuit passif R,L,C qui constitue les moyens de sécurité passifs 27.

L'amplificateur de champ magnétique est défini pour avoir une fréquence de résonance très proche ou égale à la fréquence de résonance du système RFID (Radio Frequency Identification Device, en terminologie anglosaxonne) qui lui sera couplé.

La formule suivante permet de définir les valeur R,L,C :

$$Fr= 1/(2*Pi*\sqrt{(L.C)}$$

Dans laquelle Fr désigne la fréquence de résonance, L l'inductance et C la capacité du circuit passif constitué par les guilloches 15, dans cet exemple.

Plus précisément, ces valeurs R,L,C sont calculées de manière connue de l'homme de métier, pour que le couple formé par l'amplificateur de champ magnétique 27 et le module microélectronique 7 avec son antenne 9 soit résonnant à la fréquence de travail des émetteurs radiofréquence du lecteur sans contact qui permettent de faire fonctionner le système, ou à une fréquence proche de celle-ci.

Ce système d'amplificateur de champ magnétique engendre à son voisinage une concentration très forte de flux électromagnétique à la fréquence de travail. Le module microélectronique 7 (encore appelé quelquefois la « pastille ») situé à proximité de cet amplificateur de champ pourra ainsi être activée par un champ plus fort que si elle était toute seule, et donc le système dans son ensemble est plus performant en terme de distance de fonctionnement, ou alors il peut travailler à champ émis par le lecteur plus faible.

On va maintenant décrire plus en détail un mode de réalisation du circuit passif R,L,C une fois calculé. On prend à titre d'exemple le cas où le circuit passif 27 contient des guilloches 15 en encre électroconductrice, étant entendu que le mode de réalisation serait aisément transposable par l'homme de métier à d'autres modes de réalisation dans lesquels les éléments de sécurité passifs ne sont pas des guilloches.

La capacité électrique C est avantageusement réalisée en superposition de trois couches de matière, à savoir une couche conductrice réalisant la guilloche faisant office d'antenne, une couche isolante réalisée avec un matériau de permittivité connue, et une couche conductrice permettant de relier les différentes guilloches entre elles.

Un calcul simple permet en fonction de la surface des couches conductrices en regard, de l'épaisseur d'isolant les séparant, et de la permittivité de l'isolant, de définir les caractéristiques R,L,C fournies par une telle réalisation.

Dans une variante de cette invention dans laquelle le document sécurisé est une carte à double interface de communication à contact et sans contact, le module électronique 7 comporte sur sa face supérieure un bornier de connexion à contact et sur sa face inférieure une antenne connectée à la puce 23, le moyen de sécurité passif 27 étant localisé à l'intérieur du corps de carte et constituant un circuit dédié à concentrer ou amplifier le flux électromagnétique en provenance du lecteur et à le diriger sur le module microélectronique 7 comportant les deux interfaces de communication. Dans cette variante le moyen de sécurité passif 27 est localisé en regard du module à double interface et entoure au moins trois des cotés du dit module.

Par ailleurs, le positionnement de la pastille formant le module microélectronique est défini en fonction des contraintes mécaniques portant sur le document d'identité, comme cela est connu en soi. De préférence, on positionne le module microélectronique 7 loin des axes de contraintes mécaniques subies par le produit fini. En outre, pour réaliser la pastille elle-même, on peut procéder de façon connue, ou de préférence tel que décrit dans la demande de brevet FR 05 - 01378 (FR 2 882 174 A1) du même déposant.

Dans le mode de réalisation où les moyens de sécurité passifs 27 comportent une antenne 15 intégrée de façon aussi discrète que possible, voire de façon invisible, dans un réseau de guilloches 11 réalisées en encre non conductrice, on procède de la manière suivante. Comme connu en soi, on génère grâce à un logiciel de génération de guilloches, le fichier PAO permettant une visualisation de ces guilloches. Ensuite, à partir des calculs de l'amplificateur magnétique donnant notamment la valeur d'inductance L de l'antenne de l'amplificateur magnétique, on définit une géométrie d'antenne, en utilisant une largeur de spire identique à la largeur des guilloches afin que l'antenne soit invisible ou quasi invisible dans le réseau de guilloches. A l'aide d'un logiciel de création d'image, cette antenne est ensuite dessinée pour s'intégrer parfaitement dans le réseau de guilloches, d'un point de vue visuel.

On définit ensuite les surfaces des couches permettant la création de l'élément capacitif des moyens de sécurité passifs, puis on le dessine comme précédemment, pour qu'il s'intègre visuellement avec l'antenne et les guilloches.

Toujours en utilisant un logiciel de création graphique, cette image est ensuite séparée en fonction des couches à imprimer :

- une couche pour les guilloches qui seront imprimées en encre standard
- un couche pour la première couche d'encre conductrice de l'amplificateur magnétique
- une couche pour le dépôt isolant de l'élément capacitif de l'amplificateur magnétique
- et enfin une couche pour le second dépôt conducteur de l'amplificateur magnétique.

Ces différentes couches ou masques du fichier image ainsi créés, permettront de fabriquer les formes imprimantes utilisées pour la fabrication (film « offset », écran de sérigraphie... suivant le choix effectué).

La dernière opération avant la fabrication, est le choix des couleurs des encres. On choisira de préférence pour les encres conductrices des éléments de sécurité passifs 27, des couleurs similaires aux encres utilisées pour les guilloches non conductrices 11.

Un procédé souvent utilisé pour l'impression des guilloches en offset, est l'utilisation d'encres de différentes couleurs placées à différents endroits d'un même encrier de la presse d'impression. Ceci permet un mélange partiel en certains endroits de l'encrier et donc sur le document, d'où un effet de dégradé entre deux ou trois teintes. Dans le cas de l'utilisation de ce mode d'impression, les teintes utilisées pour les encres conductrices et non conductrices seront choisies identiques, et placées de manière identique dans les deux encriers.

Afin de ne pas perturber les effets graphiques, l'encre isolante sera avantageusement choisie transparente.

Afin d'accroître encore la difficulté de localiser visuellement les éléments de sécurité passifs 27, ils pourront être réalisés à l'aide d'une encre conductrice transparente, à base de polymère intrinsèquement conducteur.

Les avantages de la présente invention par rapport aux documents d'identité existants sont nombreux. L'invention permet d'augmenter fortement la résistance des documents sécurisés existants, tels que des documents d'identité, à des tentatives de falsification. En particulier, si le document sécurisé est ouvert ou désassemblé, le module électronique 23 ne peut pas fonctionner seul, car il sera privé des moyens de sécurité passifs 27 qui lui sont associés. En effet, les moyens de sécurité passifs sont intimement et fonctionnellement liés au fonctionnement électrique des moyens de sécurité actifs du document. Par exemple, si on sort le micromodule actif du champ des guilloches, elle n'émet plus, même lorsqu'elle est placée dans le champ du lecteur. Comme les guilloches et le champ magnétique qu'elles émettent sont spécifiques à chaque document d'identité ou à chaque type de document d'identité, cela aboutit au résultat que chaque dispositif d'identification radiofréquence ne peut pas être séparé de son document d'identité, ou alors il devient inactif, ce qui constitue un haut degré de sécurité.

En outre, la sécurité physique ou graphique, est fortement couplée à la sécurité électronique du document. La falsification de ce type de document est encore plus difficilement possible. Il serait en effet nécessaire de reproduire le circuit de couplage spécifique d'un document, ce qui consisterait à émuler l'effet électromagnétique des moyens de sécurité passifs tels que des guilloches conductrices.

Aux avantages de sécurité précédents s'ajoute un avantage lors de la personnalisation des documents sécurisés, car les sites de personnalisations graphique et électrique, souvent séparés, peuvent être la cible de vols. Si tel est le cas, il est inutile de vouloir assembler des modules actifs volés et des corps de carte avec les moyens de sécurité passifs selon l'invention, car l'assemblage de tels composants non prévus pour être appariés, ne pourra pas fonctionner.

## Revendications

1. Document sécurisé (13), notamment passeport électronique, comportant un support pourvu d'une part de moyens de sécurité actifs (23,25) susceptibles de produire une réponse électromagnétique lorsque le document sécurisé traverse le champ électromagnétique d'un lecteur sans contact (17) prévu pour interroger ledit document, ledit support étant pourvu d'autre part de moyens de sécurité passifs (15,27) aptes à interagir avec les moyens de sécurité actifs (23,25) de façon à les rendre électriquement fonctionnels lorsque le document (13) est placé dans le champ électromagnétique du lecteur sans contact, **caractérisé en ce que** lesdits moyens de sécurité passifs (15,27) sont choisis de manière à présenter des caractéristiques électriques R,L,C (Ra, La, Ca) les rendant aptes à amplifier la réponse électromagnétique des moyens de sécurité actifs (23,25), par couplage électromagnétique des moyens de sécurité actifs et passifs, au-delà d'un seuil permettant l'identification du document d'identité (13) lorsque celui-ci est placé dans le champ électromagnétique du lecteur sans contact.

2. Document sécurisé (13) selon la revendication 1, **caractérisé en ce que** les moyens de sécurité actifs (23,25) comportent un microcircuit (23) relié à une antenne (25) susceptible de produire une réponse électromagnétique lorsqu'elle traverse le champ électromagnétique d'un lecteur sans contact (17), et **en ce que** ladite antenne (25) est agencée pour ne pas permettre la reconnaissance du document sécurisé (13) par un lecteur, en l'absence desdits moyens de sécurité passifs (27).

3. Document sécurisé (13) selon l'une des revendications précédentes, **caractérisé en ce que** lesdits moyens de sécurité passifs (27) comportent un réseau de guilloches conductrices (15) imprimées sur le support, et choisies de manière à ce que le circuit (R,L,C) qu'elles forment amplifie le courant induit dans l'antenne (25) des moyens de sécurité actifs lorsque le document sécurisé est placé dans le champ d'un lecteur sans contact (17), au-delà d'un seuil (S) nécessaire à assurer le fonctionnement du microcircuit (23) des moyens de sécurité actifs.

4. Document sécurisé (13) selon l'une des revendications 1 à 3, **caractérisé en ce que** les moyens de sécurité passifs (27) comportent une antenne dont les spires sont intégrées de façon invisible dans un réseau de guilloches (11) réalisées en encre non conductrice.

**5.** Document sécurisé (13) selon l'une des revendications 1 à 3, **caractérisé en ce que** lesdits moyens de sécurité passifs (27) comportent un pavé de signature réalisé sur le support.

**6.** Document sécurisé (13) selon l'une des revendications 1 à 3, **caractérisé en ce que** lesdits moyens de sécurité passifs (27) comportent un hologramme réalisé sur le support.

**7.** Document sécurisé (13) selon l'une des revendications 4 à 6, **caractérisé en ce que** les moyens de sécurité passifs (27) comportent une antenne et/ou des guilloches conductrices et/ou un pavé de signature et/ou un hologramme en combinaison.

**8.** Document sécurisé (13) selon l'une quelconque des revendications précédentes, **caractérisé en ce qu'**il se présente sous la forme d'un livret de passeport ayant une pluralité de pages, et **en ce que** les moyens de sécurité actifs (23,25) sont insérés dans une première page ou page de couverture, les moyens de sécurité passifs (27) étant disposés sur une autre page.

**9.** Document sécurisé (13) selon l'une quelconque des revendications précédentes, **caractérisé en ce qu'**il se présente sous la forme d'une carte à puce, les moyens de sécurité actifs ayant la forme d'un module microélectronique (7) comprenant une puce (23) reliée à une antenne (25) et incorporé au corps de la carte à puce, et les moyens de sécurité passifs (27) étant disposés dans l'épaisseur de la carte à puce de manière à amplifier sensiblement le champ électromagnétique traversant le module microélectronique lorsque la carte à puce est placée dans le champ d'un lecteur (17).

**10.** Document sécurisé (13) selon l'une quelconque des revendications précédentes, **caractérisé en ce que** les moyens de sécurité actifs (23,25) comportent un microcircuit (23) sans contacts externes mais relié à une antenne (25), le rendant apte à interagir uniquement avec des lecteurs sans contacts (17).

**11.** Document sécurisé (13) selon l'une quelconque des revendications 1 à 10, **caractérisé en ce que** les moyens de sécurité actifs (23,25) comportent un microcircuit (23) pourvu de contacts tout en étant relié à une antenne (25), et rendent le document sécurisé apte à interagir soit en mode à contact avec des lecteurs à contact, soit en mode sans contact avec des lecteurs sans contact.

**12.** Document sécurisé selon la revendication 3 ou la revendication 7, **caractérisé en ce que** seules certaines guilloches spécifiques (15) du réseau de guilloches (11) sont conductrices et participent aux moyens de sécurité passifs.

**13.** Système de vérification d'identité comprenant une pluralité de documents d'identité et au moins un lecteur (17) à fonctionnement à contact ou sans contact apte à interagir avec ladite pluralité de documents d'identité, ledit lecteur comportant des moyens logiciels pour envoyer un signal d'interrogation vers chaque document d'identité aux fins de vérification des informations d'identité stockées dans le document d'identité, **caractérisé en ce que** chaque document d'identité est un document sécurisé (13) conforme à l'une quelconque des revendications 1 à 12.

**Patentansprüche**

**1.** Sicheres Dokument (13), insbesondere elektronischer Pass, umfassend einen Träger, der einerseits mit aktiven Sicherheitsmitteln (23, 25) versehen ist, die geeignet sind, eine elektromagnetische Antwort zu erzeugen, wenn das sichere Dokument ein elektromagnetisches Feld eines kontaktlosen Lesegeräts (17), das dazu vorgesehen ist, das Dokument abzufragen, durchläuft, wobei der Träger andererseits mit passiven Sicherheitsmitteln (15, 27) versehen ist, die geeignet sind, mit den aktiven Sicherheitsmitteln (23, 25) zu interagieren, um sie elektrisch funktionell zu machen, wenn das Dokument (13) in dem elektromagnetischen Feld des kontaktlosen Lesegeräts angeordnet wird, **dadurch gekennzeichnet, dass** die passiven Sicherheitsmittel (15, 27) derart gewählt werden, dass sie elektrische Merkmale R, L, C (Ra, La, Ca) aufweisen, die sie dazu befähigen, die elektromagnetische Antwort der aktiven Sicherheitsmittel (23, 25) durch elektromagnetische Kopplung der aktiven und passiven Sicherheitsmittel über eine Schwelle hinaus zu verstärken, die die Identifikation des Identitätsdokuments (13) ermöglicht, wenn dieses in dem elektromagnetischen Feld des kontaktlosen Lesegeräts angeordnet wird.

**2.** Sicheres Dokument (13) nach Anspruch 1, **dadurch gekennzeichnet, dass** die aktiven Sicherheitsmittel (23, 25) eine Mikroschaltung (23) umfassen, die mit einer Antenne (25) verbunden ist, die geeignet ist, eine elektromagnetische Antwort zu erzeugen, wenn sie das elektromagnetische Feld eines kontaktlosen Lesegeräts (17) durchläuft, und dass die Antenne (25) derart angeordnet ist, dass sie das Erkennen des sicheren Dokuments (13) durch das Lesegerät nicht ermöglicht, wenn die passiven Sicherheitsmittel (27) fehlen.

**3.** Sicheres Dokument (13) nach einem der vorhergehenden Ansprüche, **dadurch gekennzeichnet, dass** die passiven Sicherheitsmittel (27) ein Netz von leitenden Guilloches (15) umfassen, die auf den Träger gedruckt sind und derart ausgewählt sind, dass die Schaltung (R, L, C), die sie bilden, den in die Antenne (25) der aktiven Sicherheitsmittel induzierten Strom, wenn das sichere Dokument in dem Feld eines kontaktlosen Lesegeräts (17) angeordnet wird, über eine Schwelle (S) hinaus, die notwendig ist, um die Funktion der Mikroschaltung (23) der aktiven Sicherheitsmittel zu gewährleisten, verstärkt.

4. Sicheres Dokument (13) nach einem der Ansprüche 1 bis 3, **dadurch gekennzeichnet, dass** die passiven Sicherheitsmittel (27) eine Antenne umfassen, deren Windungen unsichtbar in ein Netz von Guilloches (11) integriert sind, die aus einer nicht leitenden Tinte hergestellt sind.

5. Sicheres Dokument (13) nach einem der Ansprüche 1 bis 3, **dadurch gekennzeichnet, dass** die passiven Sicherheitsmittel (27) ein Signaturpflaster, das auf dem Träger ausgeführt ist, umfassen.

6. Sicheres Dokument (13) nach einem der Ansprüche 1 bis 3, **dadurch gekennzeichnet, dass** die passiven Sicherheitsmittel (27) ein Hologramm umfassen, das auf dem Träger ausgeführt ist.

7. Sicheres Dokument (13) nach einem der Ansprüche 4 bis 6, **dadurch gekennzeichnet, dass** die passiven Sicherheitsmittel (27) eine Antenne und/oder leitende Guilloches und/oder ein Signaturpflaster und/oder ein Hologramm in Kombination umfassen.

8. Sicheres Dokument (13) nach einem der vorhergehenden Ansprüche, **dadurch gekennzeichnet, dass** es in Form eines Passbüchleins mit einer Vielzahl von Seiten vorhanden ist und dass die aktiven Sicherheitsmittel (23, 25) in eine erste Seite oder Deckseite eingesetzt sind, wobei die passiven Sicherheitsmittel (27) auf einer anderen Seite angeordnet sind.

9. Sicheres Dokument (13) nach einem der vorhergehenden Ansprüche, **dadurch gekennzeichnet, dass** es in Form einer Chipkarte vorhanden ist, wobei die aktiven Sicherheitsmittel die Form eines mikroelektronischen Moduls (7) haben, umfassend einen Chip (23), der mit einer Antenne (25) verbunden und in den Körper der Chipkarte eingebaut ist, und wobei die passiven Sicherheitsmittel (27) in der Dikke der Chipkarte derart angeordnet sind, dass sie das elektromagnetische Feld, das das mikroelektronische Modul durchquert, wenn die Chipkarte in dem Feld eines Lesegeräts (17) angeordnet wird, wesentlich verstärken.

10. Sicheres Dokument (13) nach einem der vorhergehenden Ansprüche, **dadurch gekennzeichnet, dass** die aktiven Sicherheitsmittel (23, 25) eine Mikroschaltung (23) ohne externe Kontakte, allerdings angeschlossen an eine Antenne (25) umfassen, die sie dazu befähigt, nur mit kontaktlosen Lesegeräten (17) zu interagieren.

11. Sicheres Dokument (13) nach einem der Ansprüche 1 bis 10, **dadurch gekennzeichnet, dass** die aktiven Sicherheitsmittel (23, 25) eine Mikroschaltung (23) umfassen, die mit Kontakten versehen ist, wobei sie mit einer Antenne (25) verbunden ist, wobei sie das sichere Dokument dazu befähigen, entweder im Kontaktmodus mit Lesegeräten mit Kontakt oder im kontaktlosen Modus mit Lesegeräten ohne Kontakt zu interagieren.

12. Sicheres Dokument nach Anspruch 3 oder Anspruch 7, **dadurch gekennzeichnet, dass** nur gewisse spezifische Guilloches (15) des Netz von Guilloches (11) leitend sind und an den passiven Sicherheitsmitteln teilhaben.

13. System zur Identitätsüberprüfung, umfassend eine Vielzahl von Identitätsdokumenten und mindestens ein Lesegerät (17) mit Funktion mit oder ohne Kontakt, das geeignet ist, mit der Vielzahl von Identitätsdokumenten zu interagieren, wobei das Lesegerät Softwaremittel umfasst, um ein Abfragesignal an jedes Identitätsdokument zu senden, um die in dem Identitätsdokument gespeicherten Identitätsinformationen zu überprüfen, **dadurch gekennzeichnet, dass** jedes Identitätsdokument ein sicheres Dokument (13) nach einem der Ansprüche 1 bis 12 ist.

**Claims**

1. Secure document (13), in particular an electronic passport, comprising a support provided with, on the one hand, active security means (23, 25) capable of producing an electromagnetic response when the secure document passes through the electromagnetic field of a contactless reader (17) provided to interrogate said document, said support being provided, on the other hand, with passive security means (15, 27) capable of interacting with the active security means (23, 25) so as to render them electrically functional when the document (13) is placed in the electromagnetic field of the contactless reader, **characterized in that** said passive security means (15, 27) are chosen so as to exhibit electrical characteristics R, L, C (Ra, La, Ca) rendering them capable of amplifying the electromagnetic response of the active security means (23, 25), by electromagnetic coupling of the active and passive security means, beyond a threshold enabling the identity document (13) to be identified when the latter is placed in the electromagnetic field of the contactless reader.

**2.** Secure document (13) according to Claim 1, **characterized in that** the active security means (23, 25) comprise a microcircuit (23) linked to an antenna (25) capable of producing an electromagnetic response when it passes through the electromagnetic field of a contactless reader (17), and **in that** said antenna (25) is arranged so as not to allow the secure document (13) to be recognized by a reader, in the absence of said passive security means (27).

**3.** Secure document (13) according to one of the preceding claims, **characterized in that** said passive security means (27) comprise a network of conductive wavy lines (15) printed on the support, and chosen such that the circuit (R, L, C) that they form amplifies the current induced in the antenna (25) of the active security means when the secure document is placed in the field of a contactless reader (17), beyond a threshold (5) needed to ensure the operation of the microcircuit (23) of the active security means.

**4.** Secure document (13) according to one of Claims 1 to 3, **characterized in that** the passive security means (27) comprise an antenna whose turns are incorporated invisibly in a network of wavy lines (11) produced in non-conductive ink.

**5.** Secure document (13) according to one of Claims 1 to 3, **characterized in that** the passive security means (27) comprise a signature block produced on the support.

**6.** Secure document (13) according to one of Claims 1 to 3, **characterized in that** the passive security means (27) comprise a hologram produced on the support.

**7.** Secure document (13) according to one of Claims 4 to 6, **characterized in that** the passive security means (27) comprise an antenna and/or conductive wavy lines and/or a signature block and/or a hologram in combination.

**8.** Secure document (13) according to any one of the preceding claims, **characterized in that** it takes the form of a passport booklet having a plurality of pages, and **in that** the active security means (23, 25) are inserted in a first page or cover page, the passive security means (27) being arranged on another page.

**9.** Secure document (13) according to any one of the preceding claims, **characterized in that** it takes the form of a chip card, the active security means having the form of a microelectronic module (7) comprising a chip (23) linked to an antenna (25) and incorporated in the body of the chip card, and the passive security means (27) being arranged in the thickness of the chip card so as to substantially amplify the electromagnetic field passing through the microelectronic module when the chip card is placed in the field of a reader (17).

**10.** Secure document (13) according to any one of the preceding claims, **characterized in that** the active security means (23, 25) comprise a microcircuit (23) without external contacts but linked to an antenna (25), rendering it capable of interacting only with contactless readers (17).

**11.** Secure document (13) according to any one of Claims 1 to 10, **characterized in that** the active security means (23, 25) comprise a microcircuit (23) provided with contacts while being linked to an antenna (25), and render the secure document capable of interacting either in contact mode with contact readers, or in contactless mode with contactless readers.

**12.** Secure document according to Claim 3 or Claim 7, **characterized in that** only certain specific wavy lines (15) of the network of wavy lines (11) are conductive and participate in the passive security means.

**13.** Identity checking system comprising a plurality of identity documents and at least one reader (17) with contact or contactless operation capable of interacting with said plurality of identity documents, said reader comprising software means for sending an interrogation signal to each identity document in order to check identity information stored in the identity document, **characterized in that** each identity document is a secure document (13) conforming to any one of Claims 1 to 12.

Fig.1

Fig.2

Fig.3

Fig. 5

Fig. 4

EP 2 047 414 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004008386 A1
- FR 0501378

- FR 2882174 A1